(19) Europäisches Patentamt / European Patent Office / Office européen des brevets

(11) **EP 4 629 336 A1**

(12)

# EUROPEAN PATENT APPLICATION
published in accordance with Art. 153(4) EPC

(43) Date of publication:
08.10.2025 Bulletin 2025/41

(21) Application number: 23897467.9

(22) Date of filing: 14.11.2023

(51) International Patent Classification (IPC):
$H01M\ 4/525$ (2010.01)    $C01G\ 53/00$ (2025.01)
$H01M\ 4/36$ (2006.01)    $H01M\ 4/505$ (2010.01)

(52) Cooperative Patent Classification (CPC):
C01G 53/00; H01M 4/36; H01M 4/505; H01M 4/525;
Y02E 60/10

(86) International application number:
PCT/JP2023/040868

(87) International publication number:
WO 2024/116816 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.11.2022 JP 2022192365

(71) Applicant: Panasonic Intellectual Property
Management Co., Ltd.
Kadoma-shi, Osaka 571-0057 (JP)

(72) Inventors:
• SAITO, Motoharu
  Kadoma-shi, Osaka 571-0057 (JP)
• OGASAWARA, Takeshi
  Kadoma-shi, Osaka 571-0057 (JP)
• HIBINO, Mitsuhiro
  Kadoma-shi, Osaka 571-0057 (JP)

(74) Representative: Novagraaf International SA
Chemin de l'Echo 3
1213 Onex, Geneva (CH)

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(57) An example of a positive electrode active material according to one embodiment includes a lithium transition metal composite oxide that contains at least 80 mol% of Ni and Mn with respect to the total molar amount of metal elements other than Li. The lithium transition metal composite oxide is composed of one primary particle, or particles composed of 2 to 100 primary particles, and has a D50 of 0.6 μm to 4.0 μm, and a crystallite size of 370 Å to 1,500 Å. On a particle surface of the composite oxide, at least one selected from among a pyrophosphoric acid and a phosphate salt is present in an amount of 0.1 mol% to 5.0 mol%.

**EP 4 629 336 A1**

# Figure 1

**Description**

TECHNICAL FIELD

The present disclosure relates to a positive electrode active material for a non-aqueous electrolyte secondary battery and a non-aqueous electrolyte secondary battery using this positive electrode active material.

BACKGROUND ART

In recent non-aqueous electrolyte secondary batteries such as lithium-ion batteries, raising a charge voltage has been investigated from the viewpoints of increase in a capacity, a requirement of quick charge, and the like. For example, Patent Literature 1 discloses a non-aqueous electrolyte secondary battery used within a voltage range of 4.3 V (Li/Li$^+$) or higher, wherein the battery comprises a positive electrode mixture layer including: a positive electrode active material; and an inorganic phosphate salt. Patent Literature 1 describes use of phosphate salts such as lithium phosphate and pyrophosphate salts such as lithium pyrophosphate as the inorganic phosphate salt.

CITATION LIST

PATENT LITERATURE

PATENT LITERATURE 1: Japanese Patent No. 6015591

SUMMARY

Rise in the charge voltage of the battery increases resistance of the positive electrode to considerably increase resistance particularly in a region with high state of charge (SOC). Accordingly, inhibition of such increase in the resistance becomes an important challenge in order to achieve rise in the charge voltage. In particular, for using the battery for a long time, increase in resistance with cycles needs to be inhibited, rather than inhibition of initial resistance.

A positive electrode active material for a non-aqueous electrolyte secondary battery according to the present disclosure includes a lithium-transition metal composite oxide containing Ni and Mn at greater than or equal to 80 mol% relative to a total amount of moles of metal elements excluding Li, wherein the lithium-transition metal composite oxide is formed of particles constituted with one primary particle or constituted with greater than or equal to 2 and less than or equal to 100 primary particles, and the particles have a volume-based median diameter (D50) of greater than or equal to 0.6 $\mu$m and less than or equal to 4.0 $\mu$m and a crystallite size of greater than or equal to 370 Å and less than or equal to 1500 Å, and on particle surfaces of the lithium-transition metal composite oxide, at least one selected from the group consisting of pyrophosphoric acid and a phosphate salt is present at an amount of greater than or equal to 0.1 mol% and less than or equal to 5.0 mol% relative to the total amount of moles of the metal elements constituting the composite oxide excluding Li.

A non-aqueous electrolyte secondary battery according to the present disclosure comprises: a positive electrode including the above positive electrode active material; a negative electrode; and a non-aqueous electrolyte.

The positive electrode active material according to the present disclosure may effectively inhibit the increase in resistance of the positive electrode particularly in a high SOC region in charging the non-aqueous electrolyte secondary battery at a high potential.

BRIEF DESCRIPTION OF DRAWING

FIG. 1 is a sectional view of a non-aqueous electrolyte secondary battery of an example of an embodiment.
FIG. 2 is a sectional view of a test cell produced in Examples and Comparative Examples.
FIG. 3 is an electron microscopic image of a lithium-transition metal composite oxide produced in Example 1.

DESCRIPTION OF EMBODIMENTS

With the spread of non-aqueous electrolyte secondary batteries such as lithium-ion batteries for on-vehicle use and storage use in recent years, raising a charge voltage has been required from the viewpoints of increase in a capacity, a requirement of quick charge, and the like. However, raising the charge voltage to a level of, for example, 4.5 V (relative to Li metal) considerably increases resistance of the positive electrode particularly in a high SOC region. The non-aqueous electrolyte secondary battery is also required to have further improved charge-discharge efficiency and durability. In addition, reduction in a manufacturing cost is demanded, and the positive electrode active material preferably contains Ni and Mn, which are relatively inexpensive, as main components.

The present inventors have successfully inhibited the increase in the resistance during charge at a high potential while keeping excellent charge-discharge efficiency and durability by setting at least one selected from the group consisting of pyrophosphoric acid and a phosphate salt to be present on surfaces of specific particles of a composite oxide containing Ni and Mn as main components of metal elements excluding Li, the particles being constituted with one or a few primary particles. Use of the positive electrode active material according to the present disclosure effectively inhibits the increase in the resistance in the high SOC region.

The effect of inhibiting the increase in the resistance is specifically obtained when pyrophosphoric acid or the phosphate salt is applied for the specific particle structure constituted with one or a few primary particles. That is, even when pyrophosphoric acid or the phosphate salt is present on particle surfaces of a secondary-particle-type positive electrode active material in which as many as several greater than or equal to thousand and less than or equal to tens of thousands of primary particles are aggregated, the effect of inhibiting the increase in the resistance is not obtained.

Hereinafter, an example of embodiments of the positive electrode active material for a non-aqueous electrolyte secondary battery according to the present disclosure and the non-aqueous electrolyte secondary battery using this positive electrode active material will be described in detail with reference to the drawings. The scope of the present disclosure includes configurations composed of selective combinations of constitutional elements of a plurality of embodiments and modified examples described below.

In the embodiment described below, a non-aqueous electrolyte secondary battery 10 being a cylindrical battery in which a wound electrode assembly 14 is housed in a bottomed cylindrical exterior housing can 16 will be exemplified, but the exterior body of the battery is not limited to the cylindrical exterior housing can. Examples of other embodiments of the non-aqueous electrolyte secondary battery according to the present disclosure include: a rectangular battery comprising a rectangular exterior housing can; a coin battery comprising a coin-shaped exterior housing can; and a pouch battery comprising an exterior body constituted with laminated sheets including a metal layer and a resin layer. The electrode assembly is not limited to the wound electrode assembly, and may be a stacked electrode assembly in which a plurality of positive electrodes and a plurality of negative electrodes are alternately stacked via a separator.

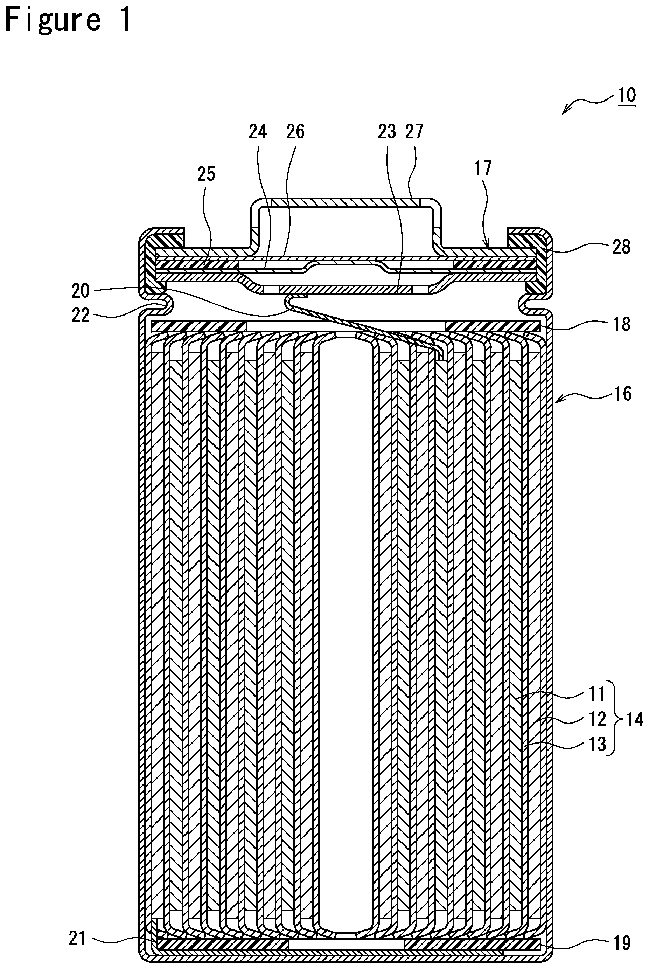

FIG. 1 is a sectional view of the non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening portion of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has lithium-ion conductivity. The non-aqueous electrolyte may be a liquid electrolyte (an electrolyte liquid) or may be a solid electrolyte.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of greater than or equal to two thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as $LiPF_6$ is used, for example.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, a halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening portion of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13, which constitute the electrode assembly 14, specifically the positive electrode 11, will be described in detail.

[Positive Electrode]

The positive electrode 11 has a positive electrode core and a positive electrode mixture layer disposed on the positive electrode core. For the positive electrode core, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, and the binder on the positive electrode core, and drying and subsequently compressing the coating film to form the positive electrode mixture layer on both the surfaces of the positive electrode core.

Examples of the conductive agent included in the positive electrode mixture layer may include carbon black such as acetylene black and Ketjenblack, graphite, carbon nanotube (CNT), carbon nanofiber, graphene, metal fiber, metal powder, and conductive whisker. The conductive agents may be used singly, or in combination thereof. A content rate of the conductive agent is greater than or equal to 0.1 mass% and less than or equal to 5 mass% relative to a mass of the positive electrode mixture layer, for example.

Examples of the binder included in the positive electrode mixture layer include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), or the like. The binders may be used singly, or in combination thereof. A content rate of the binder is greater than or equal to 0.1 mass% and less than or equal to 5 mass% relative to the mass of the positive electrode mixture layer, for example.

For the positive electrode active material, a lithium-transition metal composite oxide is used. The lithium-transition metal composite oxide is formed of particles constituted with one primary particle or constituted with greater than or equal to 2 and less than or equal to 100 primary particles, and the particles have a volume-based median diameter (D50) of greater than or equal to 0.6 $\mu$m and less than or equal to 4.0 $\mu$m and a crystallite size of greater than or equal to 370 Å and less than or equal to 1500 Å. On particle surfaces of the lithium-transition metal composite oxide, at least one selected from the group consisting of pyrophosphoric acid and a phosphate salt is present. This configuration effectively inhibits the increase in the resistance during charge at a high potential while keeping excellent charge-discharge efficiency and durability. In particular, the effect of inhibiting the increase in the resistance in the high SOC region is remarkable.

The D50 herein means a particle diameter at which a cumulative frequency is 50% from a smaller particle diameter side in volume-based particle size distribution. The particle size distribution of the lithium-transition metal composite oxide may be measured by using a laser diffraction-type particle size distribution measuring device (for example, MT3000II, manufactured by MicrotracBEL Corp.) with water as a dispersion medium.

When the lithium-transition metal composite oxide is of the particles constituted with one primary particle or constituted with greater than or equal to 2 and less than or equal to 100 primary particles, the effect of reducing the resistance by adding pyrophosphoric acid or the phosphate salt is obtained. Herein, the particles constituted with one primary particle are referred to as "single particles". As for the lithium-transition metal composite oxide, for example, greater than or equal to 50 mass% of all the particles are the single particles, and the particles constituted with as few as greater than or equal to 2 and less than or equal to 100 primary particles are included at a certain proportion. Note that, even with the particles each formed by aggregation of the primary particles, the effect similar to the case of the single particles is obtained when the number of the primary particles is about less than or equal to 100.

As noted above, the D50 of the lithium-transition metal composite oxide is greater than or equal to 0.6 $\mu$m and less than or equal to 4.0 $\mu$m. In this case, the effect of reducing the resistance by adding pyrophosphoric acid or the phosphate salt is obtained. On the other hand, the effect of reducing the resistance is substantially not obtained even when pyrophosphoric acid or the phosphate salt is added into single particles having D50 out of the range or secondary particles each formed by aggregation of a large amount of primary particles. The D50 of the lithium-transition metal composite oxide is more preferably greater than or equal to 0.7 $\mu$m and less than or equal to 3.5 $\mu$m, and particularly preferably greater than or equal to 0.8 $\mu$m and less than or equal to 3.0 $\mu$m based on the effect of reducing the resistance by adding pyrophosphoric acid or the phosphate salt.

The crystallite size of the lithium-transition metal composite oxide is greater than or equal to 370 Å and less than or equal to 1500 Å, preferably greater than or equal to 370 Å and less than or equal to 1000 Å, and more preferably greater than or equal to 370 Å and less than or equal to 750 Å. The crystallite size within the above range yields the effect of reducing the resistance by adding pyrophosphoric acid or the phosphate salt. The crystallite size is calculated with Scherrer equation represented by the following equation from a half-value width of a diffraction peak of a (104) face of an X-ray diffraction pattern by X-ray diffraction. In the following equation, "s" represents the crystallite size, "$\lambda$" represents a wavelength of the X-ray, "B" represents the half-value width of the diffraction peak of the (104) face, "$\theta$" represents a diffraction angle (rad), and "K" represents a Scherrer constant. In the present embodiment, K is 0.9.

$$s = K\lambda/B\cos\theta$$

The X-ray diffraction pattern is obtained by a powder X-ray diffraction method using a powder X-ray diffraction apparatus (manufactured by Rigaku Corporation, product name "RINT-TTR", radiation source Cu-K$\alpha$) under the following condition.

Measuring Range: 15-120°
Scanning Rate: 4°/min
Analyzing Range: 30-120°
Background: B-spline
Profile Function: Split pseudo-Voigt function
Constraint: Li(3a) + Ni(3a) = 1
Ni(3a) + Ni(3b) = $\alpha$ ($\alpha$ represents each Ni content proportion)
ICSD No.: 98-009-4814

A BET specific surface area of the lithium-transition metal composite oxide is greater than or equal to 0.5 m$^2$/g and less than or equal to 4 m$^2$/g, for example. Since secondary particles including a large number of primary particles have gaps in the particles, the specific surface area is relatively large even with a large particle diameter. On the other hand, since the single particles have no gaps in the particles, a larger particle diameter exhibits a smaller BET specific surface area. Since the secondary particles and the single particles each have variously varied particle shapes depending on the producing conditions, the BET specific surface area varies. The BET specific surface area may be measured by using TriStar II 3020 (manufactured by SHIMADZU CORPORATION) under the following condition.

Measurement Point: 11 points (P/P0: greater than or equal to 0.05 and less than or equal to 0.3)
Warm Free Space: Measured
Equilibration Interval: 5 s
Analysis Adsorptive: N2
Analysis Bath Temp.: 77.3 K (temperature of liquefied nitrogen)

Cold Free Space: Measured
Low Pressure Done: None
Analysis Method: BET multi-point method

When the BET specific surface area of the lithium-transition metal composite oxide is defined as A ($m^2$/g) and the D50 of the lithium-transition metal composite oxide is defined as B ($\mu$m), a product of A and B, AB, preferably satisfies a requirement of $1.5 \leq AB \leq 6.0$. In this case, the battery capacity and the durability are improved, for example. In the secondary particles each formed by aggregation of a large number of primary particles, the particle boundary may cruck to deteriorate charge-discharge cycle characteristics. An excessively small BET specific surface area of the single particles, which causes a small contact area with the non-aqueous electrolyte, may deteriorate the battery capacity and load characteristics. An excessively large BET specific surface area of the single particles may cause many side reactions, such as gas generation, on the positive electrode to deteriorate the cycle characteristics. Therefore, the product AB of the BET specific surface area and the D50 within the above range easily yields the battery having a high capacity, high durability, and inhibited gas generation.

The lithium-containing transition metal oxide preferably has a layered rock-salt structure. When polyphosphoric acid or the phosphate salt is applied for the composite oxide having the layered rock-salt structure, the effect of reducing the resistance during charge at a high potential becomes more remarkable. Examples of the layered rock-salt structure include a layered rock-salt structure belonging to the space group R-3m and a layered rock-salt structure belonging to the space group C2/m. Among these, the layered rock-salt structure belonging to the space group R-3m is preferable from the viewpoints of increase in the capacity and stability of the crystal structure.

At least a part of the particle surfaces of the lithium-transition metal composite oxide has the rock-salt crystal structure, for example. This rock-salt structure, which is considered to be a phase equivalent to NiO by mixing Li and Ni generated on the particle surface layer or a crystal phase derived from the NiO phase, belongs to the space group Fm-3m. The rock-salt structure, which differs from the layered rock-salt structure, inhibits diffusion of Li ions. The surface layer having the rock-salt structure may be formed on the entire region of the particle surfaces, or may be formed at a part thereof. An average thickness of this surface layer is preferably less than or equal to 5 nm, and more preferably less than or equal to 3 nm. The thickness of the surface layer may be analyzed by a nano-beam electron diffraction method using a transmission electron microscope (TEM).

The lithium-transition metal composite oxide contains Ni and Mn at greater than or equal to 80 mol% relative to a total amount of moles of metal elements excluding Li. The proportion of the total amount of Ni and Mn in the metal elements excluding Li is greater than or equal to 80 mol%, and this case may yield the effect of reducing the resistance by adding pyrophosphoric acid or the phosphate salt, and may yield the composite oxide with a high capacity relatively inexpensively. Note that the lithium-transition metal composite oxide may contain only Ni and Mn as the metal elements excluding Li.

Ni is preferably contained at the largest amount among the metal elements constituting the lithium-transition metal composite oxide excluding Li. The content rate of Ni in the lithium-transition metal composite oxide is preferably greater than or equal to 50 mol%, and more preferably greater than or equal to 70 mol% relative to the total amount of moles of the metal elements excluding Li. An upper limit of the Ni content rate may be 95 mol%, and preferably 90 mol%.

Mn is preferably contained at the second largest amount next to Ni among the metal elements constituting the lithium-transition metal composite oxide excluding Li. Mn stabilizes the crystal structure of the lithium-transition metal composite oxide. The content rate of Mn in the lithium-transition metal composite oxide is greater than or equal to 5 mol% and less than or equal to 50 mol% relative to the total amount of moles of the metal elements excluding Li, for example. Note that the lithium-transition metal composite oxide may contain Al, Co, and the like at a proportion smaller than that of Ni and Mn, for example.

The lithium-transition metal composite oxide may further include at least one metal element selected from the group consisting of Ca, Nb, Sr, Zr, and W. These metal elements may be contained inside the particles of the lithium-transition metal composite oxide, but preferably present on the particle surfaces. These metal elements present on the particle surfaces inhibit side reactions with the electrolyte liquid to improve the durability of the battery, for example. The lithium-transition metal composite oxide may contain these metal elements at an amount of greater than or equal to 0.01 mol% and less than or equal to 5 mol% relative to the total amount of Ni and Mn, for example.

As noted above, at least one selected from the group consisting of pyrophosphoric acid and the phosphate salt is present on the particle surface of the lithium-transition metal composite oxide. The at least one selected from the group consisting of pyrophosphoric acid and the phosphate salt is present at an amount of greater than or equal to 0.1 mol% and less than or equal to 5.0 ml% relative to the total amount of moles of the metal elements constituting the composite oxide excluding Li. This configuration remarkably inhibits the increase in the resistance of the positive electrode 11 in the high SOC region during charge at a high potential. The at least one selected from the group consisting of pyrophosphoric acid and the phosphate salt is present within a wide range of the particle surfaces, not unevenly present on a part of the particle surfaces of the composite oxide.

On the particle surfaces of the lithium-transition metal composite oxide, both of pyrophosphoric acid and the phosphate salt are present, for example. In any of the case where only pyrophosphoric acid is present, where only the phosphate salt is present, and where both of pyrophosphoric acid and the phosphate salt are present on the particle surfaces, the similar effects of reducing the resistance are considered to be obtained. Examples of the phosphate salt include an alkali metal salt of phosphoric acid or a salt between phosphoric acid and a group II element. The phosphate salt may be a phosphate salt including at least one metal element selected from the group consisting of an alkali metal and a group II element.

The phosphate salt may be a pyrophosphate salt such as lithium pyrophosphate, sodium pyrophosphate, potassium pyrophosphate, magnesium pyrophosphate, and calcium pyrophosphate. Among these, lithium pyrophosphate is preferable. On the particle surface of the lithium-transition metal composite oxide, pyrophosphoric acid and lithium pyrophosphate are present, for example. Pyrophosphoric acid and the phosphate salt may be added in a powder state into the composite oxide, but preferably added as a dissolved state in an alcohol or the like. It is considered that, when pyrophosphoric acid is added into the composite oxide and then a thermal treatment is performed, lithium remaining on the particle surfaces and a part of pyrophosphoric acid react to generate lithium pyrophosphate.

A content of the at least one selected from the group consisting of pyrophosphoric acid and the phosphate salt is greater than or equal to 0.1 mol% relative to the total amount of moles of the metal elements constituting the composite oxide excluding Li, and more preferably greater than or equal to 0.25 mol%, and particularly preferably greater than or equal to 0.5 mol%. In this case, the effect of reducing the resistance in the high SOC region becomes further remarkable.

An upper limit of the content of the at least one selected from the group consisting of pyrophosphoric acid and the phosphate salt is 5.0 mol%, more preferably 4.0 mol%, and particularly preferably 3.0 mol% relative to the total amount of moles of the metal elements constituting the composite oxide excluding Li. In this case, the resistance may be efficiently reduced while keeping other good battery performance such as the battery capacity and the durability.

The positive electrode active material may be constituted with substantially only the above lithium-transition metal composite oxide, or may include a composite oxide other than the above lithium-transition metal composite oxide. For the positive electrode active material, a plurality of types of the composite oxide are used according to the required battery performance, and the like, for example. Even when the other composite is used in combination as the positive electrode active material, the above effect of reducing the resistance is obtained according to the content rate of the above lithium-transition metal composite oxide.

Hereinafter, an example of a method for manufacturing the positive electrode active material will be described. The method for manufacturing the positive electrode active material includes a synthesizing step, a washing step, a drying step, and a disintegrating step, for example.

In the synthesizing step, a metal hydroxide containing Ni and Mn at greater than or equal to 80 mol% in total relative to a total amount of moles of metal elements excluding Li, and a Li compound are mixed, and the mixture is calcined to obtain the lithium-transition metal composite oxide. Examples of the Li compound include $Li_2CO_3$, $LiOH$, $Li_2O_2$, $Li_2O$, $LiNO_3$, $LiNO_3$, $Li_2SO_4$, $LiOH \cdot H_2O$, $LiH$, and $LiF$.

The composite hydroxide may be obtained by, for example, adding a solution of an alkali such as sodium hydroxide dropwise to a stirred solution of metal salts including Ni, Mn, and an optional metal element (such as Fe), to adjust a pH on the alkaline side (for example, greater than or equal to 8.5 and less than or equal to 12.5) for precipitation (coprecipitation). Instead of the metal hydroxide, a metal oxide obtained by a thermal treatment of the metal hydroxide may be used. Since a smaller particle diameter of the metal hydroxide more easily grows the primary particles to yield the single particles, D50 of the metal hydroxide is preferably less than or equal to 7 $\mu$m.

The metal hydroxide and the Li compound are mixed at a ratio so that a mole ratio of the metal elements excluding Li : Li is greater than or equal to 1:0.98 and less than or equal to 1:1.1, for example. Note that, when the metal hydroxide and the Li compound are mixed, a Ca compound, a Sr compound, a W compound, and the like may be added. Examples of the Ca compound include $CaO$, $Ca(OH)_2$, and $CaCO_3$. Examples of the Sr compound include $SrO$, $Sr(OH)_2$, and $SrCO_3$. Examples of the W compound include $WO_3$, $Li_2WO_4$, $Li_4WO_5$, and $Li_6W_2O_9$.

The mixture of the metal hydroxide, the Li compound, and the like is calcined under an oxygen atmosphere (under a gas flow with an oxygen concentration of greater than or equal to 80%), for example. The calcining step may be a multi-stage calcining. An example of the calcining condition includes a temperature-rising rate of greater than or equal to 1.0°C/min and less than or equal to 5.5°C/min within a temperature range of greater than or equal to 450°C and less than or equal to 680°C, and a highest reaching temperature of greater than or equal to 850°C and less than or equal to 1100°C. A temperature-raising rate from 680°C to the highest reaching temperature may be greater than or equal to 0.1°C/min and less than or equal to 3.5°C/min. A holding time at the highest reaching temperature may be greater than or equal to 1 hour and less than or equal to 30 hours. Regulating the calcining condition may produce the single particles, and may regulate their particle diameters. For example, raising the highest reaching temperature tends to yield the single particles, and tends to increase their particle diameters.

In the washing step, the lithium-transition metal composite oxide obtained in the synthesizing step is washed with water and dehydrated to obtain a cake-like composition. The washing with water and the dehydration may be performed by a known method under a known condition. Note that the Ca compound, the Sr compound, the W compound, and the like may be added into the cake-like composition. In the drying step, the cake-like composition obtained in the washing step is dried to obtain a powdery composition. The drying step may be performed under a vacuum atmosphere. For example, the drying temperature is greater than or equal to 150°C and less than or equal to 400°C, and the drying time is greater than or equal to 0.5 hours and less than or equal to 15 hours.

The powdery composition obtained in the drying step is disintegrated by using a crushing machine such as a jet mill. The disintegration with the jet mill may be performed by, for example, using PJM-80 (manufactured by Nippon Pneumatic Mfg. Co., Ltd.) under the following condition.

Consumption amount of compressed air: 0.5 $Nm^3$/min
Pressure of supplied gas: 0.53 MPa
Treatment amount: 2000 g/hour

[Negative Electrode]

The negative electrode 12 has a negative electrode core and a negative electrode mixture layer disposed on the negative electrode core. For the negative electrode core, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material and the binder on the negative electrode core, and drying and subsequently compressing the coating film to form the negative electrode mixture layer on both the surfaces of the negative electrode core. The negative electrode mixture layer may include a conductive agent such as CNT.

For the negative electrode active material, a carbon material that reversibly occludes and releases lithium ions is typically used. For the negative electrode active material, an element that forms an alloy with Li, such as Si and Sn, a material containing such an element, and the like may be used. Among these, a silicon-containing material containing Si is preferable. As the negative electrode active material, lithium titanate, which has a higher potential of charge and discharge relative to metal lithium than that of the carbon material and the like, may also be used. The negative electrode active materials may be used singly, or in combination thereof.

The carbon material to function as the negative electrode active material is, for example, at least one selected from the group consisting of natural graphite, artificial graphite, soft carbon, and hard carbon. Among these, artificial graphite such as massive artificial graphite (MAG) and graphitized mesophase-carbon microbead (MCMB), natural graphite such as flake graphite, massive graphite, and amorphous graphite, or a mixture thereof are preferably used. Examples of the silicon-containing material to function as the negative electrode active material include a silicon alloy, a silicon compound, and a composite material containing Si. A preferable silicon-containing material is of composite particles including an ion-conductive phase and Si phases dispersed in the ion-conductive phase.

For the binder included in the negative electrode mixture layer, a fluororesin, an olefin resin, PAN, a polyimide, a polyamide, an acrylic resin, and the like may be used as in the case of the positive electrode 11, and polyvinyl acetate, styrene-butadiene rubber (SBR), and the like may be used. Among these, SBR is preferably used. The binders may be used singly, or in combination thereof. The negative electrode mixture layer preferably includes CMC or a salt thereof, polyacrylic acid (PAA) or a salt thereof, polyvinyl alcohol (PVA), or the like. These materials function as a thickener in the negative electrode mixture slurry. A content rate of the binder is, for example, greater than or equal to 0.1 mass% and less than or equal to 5 mass% relative to the mass of the negative electrode mixture layer.

[Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin may be formed.

On a boundary between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

EXAMPLES

Hereinafter, the present disclosure will be further described with Examples, but the present disclosure is not limited to these Examples.

<Example 1>

[Production of Positive Electrode Active Material]

LiOH and powder of $Ni_{0.8}Mn_{0.2}(OH)_2$ obtained by a coprecipitation method were mixed so that a mole ratio between Li and a total amount of Ni and Mn was 1.1:1 to obtain a mixture. This mixture was calcined with two stages under an oxygen flow with an oxygen concentration of greater than or equal to 90% (at a flow rate of greater than or equal to 0.15 L/min and less than or equal to 0.2 L/min per litter of a furnace capacity). Specifically, the temperature was raised from room temperature to 670°C over 5 hours, and then raised from 650°C to 850°C over 2 hours. Thereafter, the temperature was held at 850°C for 12 hours to obtain a lithium-transition metal composite oxide.

The obtained lithium-transition metal composite oxide was washed with water to remove excess lithium, the composite oxide washed with water was dried, and then disintegrated with a jet mill. A solution of pyrophosphoric acid in ethanol was prepared, and this solution was sprayed to the lithium-transition metal composite oxide subjected to the crushing treatment, and then a thermal treatment was performed at a temperature of 180°C for 2 hours to obtain a lithium-transition metal composite oxide in which pyrophosphoric acid was present on the particle surfaces. Note that the amount of the pyrophosphoric acid solution added was regulated so that a content rate of pyrophosphoric acid was 0.1 mol% relative to the total amount of moles of the metal elements of the composite oxide excluding Li.

A part of pyrophosphoric acid adhered onto the particle surfaces of the composite oxide by spraying the pyrophosphoric acid solution is considered to react with excess lithium to change into lithium pyrophosphate by the thermal treatment. Thus, on the particle surfaces of the composite oxide, pyrophosphoric acid and lithium pyrophosphate are present. A presence ratio between pyrophosphoric acid and lithium pyrophosphate can be regulated by, for example, the condition of washing with water and the condition of the thermal treatment. A higher level of washing with water typically increases the ratio of pyrophosphoric acid, but this present ratio is considered not to significantly affect the battery performance. That is, the similar effect of reducing the resistance is obtained even when the presence ratio between pyrophosphoric acid and lithium pyrophosphate changes.

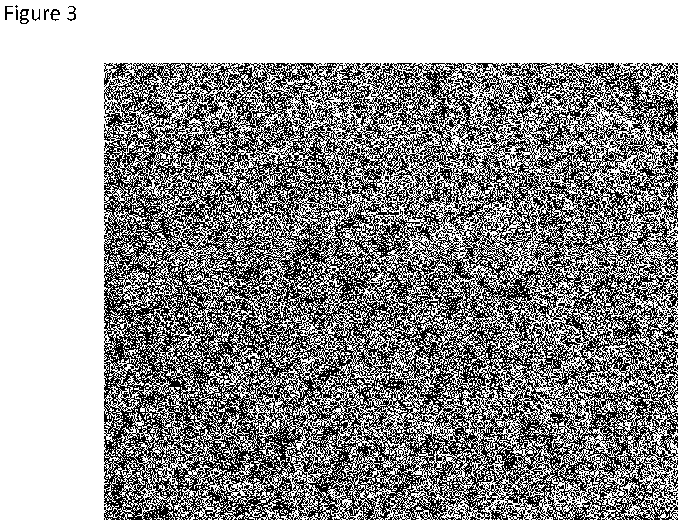

The obtained lithium-transition metal composite oxide was observed by using a scanning electron microscope (SEM) to confirm that many particles of the composite oxide were single particles constituted with one primary particles. FIG. 3 shows the SEM image of the obtained lithium-transition metal composite oxide. Although the obtained composite oxide included particles constituted with as few as less than or equal to 100 of primary particles, such particles have properties similar to the single particles. That is, pyrophosphoric acid acts similarly to the case of the single particles. D50 and a crystallite size of the lithium-transition metal composite oxide were measured by the above methods. The D50 was 1.2 μm, and the crystallite size was 518 Å. The crystal structure of the lithium-transition metal composite oxide was a layered rock-salt structure belonging to the space group R-3m, and a rock salt structure, which was considered to be a crystal phase derived from a NiO phase, was found on the particle surfaces.

[Production of Test Cell]

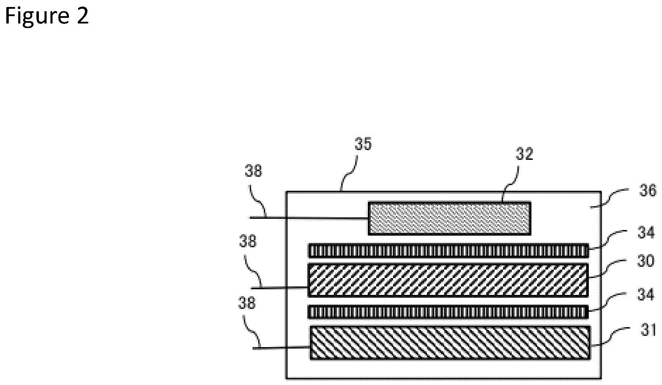

A test cell illustrated in FIG. 2 was produced in the following procedure. A working electrode 30 was a positive electrode using the above lithium-transition metal composite oxide as a positive electrode active material. The positive electrode active material, acetylene black, and polyvinylidene fluoride were mixed at a mass ratio of 80:10:10, and N-methyl-2-pyrrolidone was used as a dispersion medium to prepare a positive electrode mixture slurry. This slurry was applied on aluminum foil being a positive electrode core, and the coating film was dried in vacuo at 110°C to obtain the working electrode 30.

Under dry air having a dew point of less than or equal to -50°C, separators 34 were interposed between electrodes of the working electrode 30, a counter electrode 31 (a negative electrode), and a reference electrode 32 to which an electrode lead 38 was each attached to produce an electrode group, and this electrode group was housed in an exterior body 35. Thereafter, an electrolyte liquid 36 was injected into the exterior body 35, and the exterior body 35 was sealed to obtain a test cell. A detail of each constituent in the test cell was as follows.

Counter electrode 31: Lithium metal
Reference electrode 32: Lithium metal
Separator 34: Separator made of polyethylene
Non-aqueous electrolyte: Into a non-aqueous solvent obtained by mixing ethylene carbonate (EC) and ethyl methyl carbonate (EMC) at a volume ratio (25°C) of 3:7, $LiPF_6$ was dissolved as an electrolyte salt so that the concentration was 1.0 mol/l for use.

<Example 2>

A test cell was produced in the same manner as in Example 1 except that, in the production of the lithium-transition metal composite oxide, the amount of the pyrophosphoric acid solution added was changed to change the content rate of pyrophosphoric acid and lithium pyrophosphate to 0.25 mol%.

<Example 3>

A test cell was produced in the same manner as in Example 1 except that, in the production of the lithium-transition metal composite oxide, the amount of the pyrophosphoric acid solution added was changed to change the content rate of pyrophosphoric acid and lithium pyrophosphate to 0.5 mol%.

<Example 4>

A test cell was produced in the same manner as in Example 1 except that, in the production of the lithium-transition metal composite oxide, the amount of the pyrophosphoric acid solution added was changed to change the content rate of pyrophosphoric acid and lithium pyrophosphate to 1.0 mol%.

<Example 5>

A test cell was produced in the same manner as in Example 1 except that, in the production of the lithium-transition metal composite oxide, the amount of the pyrophosphoric acid solution added was changed to change the content rate of pyrophosphoric acid and lithium pyrophosphate to 2.0 mol%.

<Example 6>

A test cell was produced in the same manner as in Example 1 except that, in the production of the lithium-transition metal composite oxide, the amount of the pyrophosphoric acid solution added was changed to change the content rate of pyrophosphoric acid and lithium pyrophosphate to 3.0 mol%.

<Comparative Example 1>

A test cell was produced in the same manner as in Example 1 except that, in the production of the lithium-transition metal composite oxide, pyrophosphoric acid was not added.

<Comparative Example 2>

A test cell was produced in the same manner as in Example 3 except that, in the production of the lithium-transition metal composite oxide, boric acid ($H_3BO_3$) was added instead of pyrophosphoric acid to obtain a composite oxide in which boron was present on the particle surfaces.

<Comparative Example 3>

A test cell was produced in the same manner as in Example 4 except that, in the production of the lithium-transition metal composite oxide, boric acid ($H_3BO_3$) was added instead of pyrophosphoric acid to obtain a composite oxide in which boron was present on the particle surfaces.

<Comparative Example 4>

A test cell was produced in the same manner as in Example 5 except that, in the production of the lithium-transition metal composite oxide, boric acid ($H_3BO_3$) was added instead of pyrophosphoric acid to obtain a composite oxide in which boron was present on the particle surfaces.

<Comparative Example 5>

A test cell was produced in the same manner as in Example 6 except that, in the production of the lithium-transition metal composite oxide, boric acid ($H_3BO_3$) was added instead of pyrophosphoric acid to obtain a composite oxide in which boron was present on the particle surfaces.

Each of the test cells of Examples and Comparative Examples was subjected to the following performance evaluation. Table 1 shows the evaluation results.

[Evaluation of Internal Resistance]

In the middle of a cycle test, an internal resistance (IV) was measured in each state of SOC 10%, 50% (3.89 V), or 100% (4.45 V) in order to measure the internal resistance at the 11th, the 22nd, and the 33rd cycles. As for the measurement, each of the SOC states was prepared, and then the test cell was rest for 15 minutes to specify the voltage at this time as V0. The test cell was discharged for 10 seconds, and a dropping amount of each voltage was specified as ∆V. From a straight line obtained from each of current values and each of ∆V, the IV resistance was calculated to be specified as the internal resistance.

[Evaluation of Charge-Discharge Efficiency and Capacity Retention]

Under an environment temperature of 25°C, the above test cell was charged at a constant current of 0.2 C until 4.5 V (lithium-based), and then charged at a constant voltage of 4.5 V until 0.02 C. Thereafter, the test cell was discharged at a constant current of 0.1 C until 2.5 V. A charge capacity and a discharge capacity in this time were measured, and the discharge capacity was divided by the charge capacity to calculate charge-discharge efficiency. The current value in discharge was changed to 0.2 C after the 2nd cycle, and this charge-discharge cycle was performed with 34 cycles. A discharge capacity at the 34th cycle was divided by the discharge capacity at the 1st cycle to calculate capacity retention.

[Table 1]

| | Addition amount | Charge-discharge efficiency % | Capacity retention % | Internal resistance | | | | | |
|---|---|---|---|---|---|---|---|---|---|
| | | | | SOC10% | | SOC50% | | SOC100% | |
| | | | | 11cyc | 33cyc | 11cyc | 33cyc | 11cyc | 33cyc |
| Example 1 | Pyrophosphoric acid 0.1 mol% | 89 | 76 | 15 | 20 | 4 | 13 | 17 | 27 |
| Example 2 | Pyrophosphoric acid 0.25 mol% | 88 | 76 | 14 | 20 | 4 | 10 | 16 | 20 |
| Example 3 | Pyrophosphoric acid 0.5 mol% | 88 | 80 | 11 | 13 | 4 | 7 | 15 | 16 |
| Example 4 | Pyrophosphoric acid 1.0 mol% | 89 | 80 | 10 | 11 | 4 | 7 | 15 | 16 |
| Example 5 | Pyrophosphoric acid 2.0 mol% | 90 | 85 | 8 | 10 | 4 | 6 | 16 | 18 |
| Example 6 | Pyrophosphoric acid 3.0 mol% | 90 | 91 | 6 | 6 | 4 | 5 | 15 | 16 |
| Comparative Example 1 | - | 89 | 74 | 14 | 20 | 4 | 15 | 19 | 30 |
| Comparative Example 2 | Boric acid 0.5 mol% | 90 | 80 | 14 | 21 | 4 | 14 | 20 | 31 |
| Comparative Example 3 | Boric acid 1.0 mol% | 92 | 82 | 9 | 20 | 3 | 12 | 16 | 30 |
| Comparative Example 4 | Boric acid 2.0 mol% | 92 | 87 | 7 | 15 | 3 | 10 | 15 | 29 |

(continued)

| | Addition amount | Charge-discharge efficiency % | Capacity retention % | Internal resistance | | | | | |
| | | | | SOC10% | | SOC50% | | SOC100% | |
| | | | | 11cyc | 33cyc | 11cyc | 33cyc | 11cyc | 33cyc |
| Comparative Example 5 | Boric acid 3.0 mol% | 92 | 88 | 8 | 13 | 3 | 9 | 15 | 28 |

From the results shown in Table 1, it is understood that the test cells of Comparative Examples considerably increased the resistance of the positive electrode with increasing the number of cycles particularly in the high SOC region, but the test cells of Examples effectively inhibited the increase in the resistance.

The test cells of Comparative Examples 2 to 5, which used the positive electrode active material containing B on the particle surfaces, could reduce the electrode resistance in the middle and low SOC regions compared with the test cell of Comparative Example 1, but little effect of inhibiting the increase in the resistance was obtained in the high SOC region. In contrast, the test cells of Examples, which used the positive electrode active material containing pyrophosphoric acid on the particle surfaces, could reduce the electrode resistance in not only the middle or low SOC regions but also the high SOC region. Particularly when the amount of pyrophosphoric acid added was greater than or equal to 0.5 mol%, the effect of reducing the resistance was more remarkable. In addition, the test cells of Examples had charge-discharge efficiency and capacity retention (durability) equivalent to or more excellent than the test cells of Comparative Examples.

Note that the effect of reducing the resistance by adding pyrophosphoric acid is obtained only when the positive electrode active material (the lithium-transition metal composite oxide) is of the particles constituted with as few as less than or equal to 100 primary particles, and the particles have D50 of greater than or equal to 0.6 $\mu$m and less than or equal to 4.0 $\mu$m and a crystallite size of greater than or equal to 370 Å and less than or equal to 1500 Å. The present inventors used a common secondary-particle-type positive electrode active material in which pyrophosphoric acid was added to evaluate a positive electrode, and which included as many as greater than or equal to several thousands and less than or equal to several tens of thousands of primary particles, but no effect of reducing the resistance by adding pyrophosphoric acid was observed (see Reference Examples).

Reference Examples will be further described below. Reference Examples show that, when a composite oxide having a spinel structure was used as the lithium-transition metal composite oxide and when the secondary-particle-type composite oxide each formed by aggregation of a large number of primary particles was used, no effect of reducing the resistance by adding pyrophosphoric acid was obtained.

<Reference Example 1>

A test cell was produced in the same manner as in Example 1 except that $LiNi_{0.5}Mn_{1.5}O_4$ having a spinel structure was used as the lithium-transition metal composite oxide, and pyrophosphoric acid was not added.

<Reference Example 2>

A test cell was produced in the same manner as in Example 1 except that $LiNi_{0.5}Mn_{1.5}O_4$ having a spinel structure was used as the lithium-transition metal composite oxide, and the content rate of pyrophosphoric acid and lithium pyrophosphate was changed to 0.5 mol%.

[Evaluation of Internal Resistance]

Internal resistance (IV) of the test cells of Reference Examples 1 and 2 was measured in each state of SOC 10% (4.00 V), 50% (4.73 V), and 100% (4.80 V). The other measurement conditions were the same as in Example 1 and the like. Table 2 shows the evaluation results.

[Evaluation of Charge-Discharge Efficiency and Capacity Retention]

Under an environment temperature of 25°C, the test cells of Reference Examples 1 and 2 were charged at a constant current of 0.2 C until 5.0 V (lithium-based), and then charged at a constant voltage of 5.0 V until 0.02 C. Thereafter, the test cells were discharged at a constant current of 0.1 C until 3.5 V. A charge capacity and a discharge capacity in this time were measured, and the discharge capacity was divided by the charge capacity to calculate charge-discharge efficiency. The current value in discharge was changed to 0.2 C after the 2nd cycle, and this charge-discharge cycle was performed with 34 cycles. A discharge capacity at the 34th cycle was divided by the discharge capacity at the 1st cycle to calculate capacity retention. Table 2 shows the evaluation results.

[Table 2]

| | Addition amount | Charge-discharge efficiency % | Capacity retention % | Internal resistance | | | | | |
|---|---|---|---|---|---|---|---|---|---|
| | | | | SOC10% | | SOC50% | | SOC100% | |
| | | | | 11cyc | 33cyc | 11cyc | 33cyc | 11cyc | 33cyc |
| Reference Example 1 | - | 96 | 92 | 6.8 | 8.6 | 3.4 | 5.1 | 4.8 | 6.0 |
| Reference Example 2 | Pyrophosphoric acid 0.5 mol% | 96 | 97 | 8.7 | 11.6 | 3.3 | 4.4 | 4.5 | 6.3 |

As shown in Table 2, the test cell of Reference Example 2 exhibited slightly reduced but almost equal initial resistance with both of SOC 50% and 100% compared with the test cell of Reference Example 1. On the other hand, the initial resistance with SOC 10% increased. The increase in the resistance with the cycles was slightly inhibited with SOC 50%, but not inhibited at all with SOC 10% and SOC 100%. On the other hand, coating with polyphosphoric acid was found to improve the cycle characteristics.

<Reference Example 3>

A test cell was produced in the same manner as in Example 1 except that secondary-particle-type $LiNi_{0.9}Co_{0.05}Al_{0.05}O_2$ was used as the lithium-transition metal composite oxide, and pyrophosphoric acid was not added.

<Reference Example 4>

A test cell was produced in the same manner as in Example 1 except that secondary-particle-type $LiNi_{0.9}Co_{0.05}Al_{0.05}O_2$ was used as the lithium-transition metal composite oxide, and the content rate of pyrophosphoric acid and lithium pyrophosphate was changed to 0.5 mol%.

[Evaluation of Internal Resistance]

Internal resistance (IV) of the test cells of Reference Examples 3 and 4 was measured in each state of SOC 10%, 50% (3.89 V), and 100% (4.40 V). The other measurement conditions were the same as in Example 1 and the like. Table 2 shows the evaluation results.

[Evaluation of Charge-Discharge Efficiency and Capacity Retention]

Under an environment temperature of 60°C, the test cells of Reference Examples 3 and 4 were charged at a constant current of 0.2 C until 4.4 V (lithium-based), and then charged at a constant voltage of 4.4 V until 0.02 C. Thereafter, the test cells were discharged at a constant current of 0.1 C until 2.5 V. A charge capacity and a discharge capacity in this time were measured, and the discharge capacity was divided by the charge capacity to calculate charge-discharge efficiency. The current value in discharge was changed to 0.2 C after the 2nd cycle, and this charge-discharge cycle was performed with 34 cycles. A discharge capacity at the 34th cycle was divided by the discharge capacity at the 1st cycle to calculate capacity retention.

[Table 3]

| | Addition amount | Charge-discharge efficiency % | Capacity retention % | Internal resistance | | | | | |
|---|---|---|---|---|---|---|---|---|---|
| | | | | SOC10% | | SOC50% | | SOC100% | |
| | | | | 11cyc | 33cyc | 11cyc | 33cyc | 11cyc | 33cyc |
| Reference Example 3 | - | 96 | 94 | 2 | 3 | 1 | 3 | 6 | 9 |

(continued)

| | Addition amount | Charge-discharge efficiency % | Capacity retention % | Internal resistance | | | | | |
|---|---|---|---|---|---|---|---|---|---|
| | | | | SOC10% | | SOC50% | | SOC100% | |
| | | | | 11cyc | 33cyc | 11cyc | 33cyc | 11cyc | 33cyc |
| Reference Example 4 | Pyrophosphoric acid 0.5 mol% | 93 | 93 | 2 | 3 | 1 | 2 | 8 | 13 |

As shown in Table 3, the secondary-particle-type composite oxide could not inhibit the increase in the resistance with the cycles with SOC 10% by adding pyrophosphoric acid even with the same layered structure. It was considered that the increase in the resistance could not be inhibited due to an effect of Al and Mn included in the structure (elution) and cracking of the secondary particles with the cycles. As obvious from Reference Examples, the effect of pyrophosphoric acid was significantly affected by composition and particle shape of the composite oxide, and specifically exhibited with the specific composite oxide.

The present disclosure will be further described with the following embodiments.

Constitution 1: A positive electrode active material for a non-aqueous electrolyte secondary battery, the positive electrode active material including a lithium-transition metal composite oxide containing Ni and Mn at greater than or equal to 80 mol% relative to a total amount of moles of metal elements excluding Li, wherein the lithium-transition metal composite oxide is formed of particles constituted with one primary particle or constituted with greater than or equal to 2 and less than or equal to 100 primary particles, and the particles have a volume-based median diameter (D50) of greater than or equal to 0.6 $\mu$m and less than or equal to 4.0 $\mu$m and a crystallite size of greater than or equal to 370 Å and less than or equal to 1500 Å, and on particle surfaces of the lithium-transition metal composite oxide, at least one selected from the group consisting of pyrophosphoric acid and a phosphate salt is present at an amount of greater than or equal to 0.1 mol% and less than or equal to 5.0 mol% relative to the total amount of moles of the metal elements constituting the composite oxide excluding Li.

Constitution 2: The positive electrode active material for a non-aqueous electrolyte secondary battery according to Constitution 1, wherein the phosphate salt is lithium pyrophosphate.

Constitution 3: The positive electrode active material for a non-aqueous electrolyte secondary battery according to Constitution 1 or 2, wherein at least a part of the particle surfaces of the lithium-transition metal composite oxide has a rock-salt crystal structure.

Constitution 4: The positive electrode active material for a non-aqueous electrolyte secondary battery according to any one of Constitutions 1 to 3, wherein the lithium-transition metal composite oxide further includes at least one metal element selected from the group consisting of Ca, Nb, Sr, Zr, and W.

Constitution 5: A non-aqueous electrolyte secondary battery, comprising: a positive electrode including the positive electrode active material for a non-aqueous electrolyte secondary battery according to any one of Constitutions 1 to 4; a negative electrode; and a non-aqueous electrolyte.

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Working electrode (positive electrode), 31 Counter electrode (negative electrode), 32 Reference electrode, 34 Separator, 35 Exterior body, 36 Electrolyte liquid, 38 Electrode lead

Claims

1. A positive electrode active material for a non-aqueous electrolyte secondary battery, the positive electrode active material including a lithium-transition metal composite oxide containing Ni and Mn at greater than or equal to 80 mol% relative to a total amount of moles of metal elements excluding Li, wherein

the lithium-transition metal composite oxide is formed of particles constituted with one primary particle or constituted with greater than or equal to 2 and less than or equal to 100 primary particles, and the particles have a volume-based median diameter (D50) of greater than or equal to 0.6 $\mu$m and less than or equal to 4.0 $\mu$m and a crystallite size of greater than or equal to 370 Å and less than or equal to 1500 Å, and

15

on particle surfaces of the lithium-transition metal composite oxide, at least one selected from the group consisting of pyrophosphoric acid and a phosphate salt is present at an amount of greater than or equal to 0.1 mol% and less than or equal to 5.0 mol% relative to the total amount of moles of the metal elements constituting the composite oxide excluding Li.

2. The positive electrode active material for a non-aqueous electrolyte secondary battery according to claim 1, wherein the phosphate salt is lithium pyrophosphate.

3. The positive electrode active material for a non-aqueous electrolyte secondary battery according to claim 1, wherein at least a part of the particle surfaces of the lithium-transition metal composite oxide has a rock-salt crystal structure.

4. The positive electrode active material for a non-aqueous electrolyte secondary battery according to claim 1, wherein the lithium-transition metal composite oxide further includes at least one metal element selected from the group consisting of Ca, Nb, Sr, Zr, and W.

5. A non-aqueous electrolyte secondary battery, comprising:

a positive electrode including the positive electrode active material for a non-aqueous electrolyte secondary battery according to any one of claims 1 to 4;
a negative electrode; and
a non-aqueous electrolyte.

# Figure 1

Figure 2

Figure 3

## INTERNATIONAL SEARCH REPORT

| | International application No. |
|---|---|
| | **PCT/JP2023/040868** |

**A. CLASSIFICATION OF SUBJECT MATTER**

*H01M 4/525*(2010.01)i; *C01G 53/00*(2006.01)i; *H01M 4/36*(2006.01)i; *H01M 4/505*(2010.01)i
FI: H01M4/525; C01G53/00 A; H01M4/36 C; H01M4/505

According to International Patent Classification (IPC) or to both national classification and IPC

**B. FIELDS SEARCHED**

Minimum documentation searched (classification system followed by classification symbols)

H01M4/525; C01G53/00; H01M4/36; H01M4/505

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/053357 A1 (MITSUI MINING & SMELTING CO., LTD.) 16 April 2015 (2015-04-16) | 1-5 |
| A | WO 2016/060105 A1 (SUMITOMO CHEMICAL CO., LTD.) 21 April 2016 (2016-04-21) | 1-5 |
| A | JP 2017-188443 A (NICHIA CORPORATION) 12 October 2017 (2017-10-12) | 1-5 |
| A | WO 2022/169331 A1 (LG ENERGY SOLUTION, LTD.) 11 August 2022 (2022-08-11) | 1-5 |
| A | US 2022/0320575 A1 (SK ON CO., LTD.) 06 October 2022 (2022-10-06) | 1-5 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **29 January 2024** | **13 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (July 2022)

**INTERNATIONAL SEARCH REPORT**
Information on patent family members

International application No.

**PCT/JP2023/040868**

| Patent document cited in search report | | | Publication date (day/month/year) | Patent family member(s) | | | Publication date (day/month/year) |
|---|---|---|---|---|---|---|---|
| WO | 2015/053357 | A1 | 16 April 2015 | US | 2016/0254539 | A1 | |
| | | | | KR | 10-2016-0032246 | A | |
| | | | | CN | 105612124 | A | |
| WO | 2016/060105 | A1 | 21 April 2016 | US | 2017/0237069 | A1 | |
| | | | | EP | 3208872 | A1 | |
| | | | | KR | 10-2017-0057450 | A | |
| | | | | CN | 107078293 | A | |
| JP | 2017-188443 | A | 12 October 2017 | US | 2017/0288221 | A1 | |
| WO | 2022/169331 | A1 | 11 August 2022 | KR | 10-2022-0113196 | A | |
| | | | | CN | 116686111 | A | |
| US | 2022/0320575 | A1 | 06 October 2022 | EP | 4067311 | A1 | |
| | | | | KR | 10-2022-0136718 | A | |
| | | | | CN | 115207298 | A | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6015591 B